# EUROPÄISCHE PATENTSCHRIFT

(11) **EP 1 989 353 B1**
(45) Veröffentlichungstag und Bekanntmachung des Hinweises auf die Patenterteilung: **06.05.2015**
(21) Anmeldenummer: 07712390.9
(22) Anmeldetag: 01.03.2007
(51) Int. Cl.: D06M 10/02, D06M 23/08, C08J 5/18, C08J 7/04, B29C 59/02, D03D 15/04

(54) **UNBENETZBARE OBERFLÄCHEN**
NON-WETTABLE SURFACES
SURFACES NON MOUILLABLES

(30) Priorität: 01.03.2006 DE 102006009761
(43) Veröffentlichungstag der Anmeldung: 12.11.2008
(73) Patentinhaber: Rheinische Friedrich-Wilhelms-Universität Bonn, 53113 Bonn (DE); Deutsche Institute für Textil- und Faserforschung Denkendorf, 73770 Denkendorf (DE)
(72) Erfinder: BARTHLOTT, Wilhelm, 53115 Bonn (DE); CERMAN, Zdenek, 53121 Bonn (DE); SCHERRIEBLE, Andreas, 71640 Ludwigsburg (DE); STEGMAIER, Thomas, 73277 Owen (DE); STRIFFLER, Boris Felix, 53879 Euskirchen (DE); VON ARNIM, Volkmar, 73230 Kirchheim Unter Teck (DE)
(74) Vertreter: Von Kreisler Selting Werner - Partnerschaft von Patentanwälten und Rechtsanwälten mbB
(86) Internationale Anmeldenummer: PCT/EP2007/051938
(87) Internationale Veröffentlichungsnummer: WO 2007/099141

(56) Entgegenhaltungen:
- WO-A-2004/037944
- WO-A-2005/005679
- CN-A- 1 854 174
- JP-A- 60 211 629
- US-A1- 2007 013 106
- MANHUI S ET AL.: "Artificial Lotus Leaf by Nanocasting" LANGMUIR, ACS, WASHINGTON, DC, US, Bd. 21, Nr. 19, 13. September 2005 (2005-09-13), Seiten 8978-8981, XP002448808
- SUN T ET AL.: "Bioinspired Surfaces with Special Wettability" ACCOUNTS OF CHEMICAL RESEARCH, ACS, WASHINGTON, DC, US, Bd. 38, Nr. 8, August 2005 (2005-08), Seiten 644-652, XP002448809
- P. HIETZ ET AL: 'Correlation between water relations and within-canopy distribution of epiphytic ferns in a Mexican cloud forest' OECOLOGIA Bd. 114, Nr. 3, 14 April 1998, Seiten 305 - 316, XP055035617 DOI: 10.1007/s004420050452 ISSN: 0029-8549
- NEINHUIS C ET AL: "CHARACTERIZATION AND DISTRIBUTION OF WATER-REPELLENT, SELF-CLEANING PLANT SURFACES", ANNALS OF BOTANY, ACADEMIC PRESS, LONDON, GB, vol. 79, 1 January 1997 (1997-01-01), pages 667-677, XP001165750, ISSN: 0305-7364, DOI: 10.1006/ANBO.1997.0400

## Beschreibung

Die vorliegende Erfindung betrifft unbenetzbare Oberflächen, Verfahren zu ihrer Herstellung und ihre Verwendung.

WO 96/04123 betrifft selbstreinigende Oberflächen von Gegenständen mit Erhebungen hydrophobierten Materials. Auf solchen Oberflächen abgelagerte Verunreinigungen können durch bewegtes Wasser entfernt werden.

Solche Oberflächen sind in Einsatzbereichen interessant, in denen Oberflächen in Kontakt mit Verschmutzungen, beispielsweise aus der Luft stehen und durch gelegentlichen Kontakt mit Wasser, beispielsweise Regen, gereinigt werden können. Solche Oberflächen weisen - wie sich durch Untersuchungen ergeben haben - Kontaktwinkel von über 130° mit Wasser auf. Die sich kugelförmig ausbildenden Tropfen sind nicht in der Lage, die Oberfläche zu benetzen.

US 2005/0061221 beschreibt das Problem der Reduzierung des Reibungswiderstandes bei einer Relativbewegung zwischen einer festen Oberfläche und einer Flüssigkeit. Beschrieben ist hierfür eine hierarchische, fraktale Struktur. Ausführungsbeispiele sind nicht beschrieben.

WO 2005/005679 betrifft Nanofasern und Strukturen, die Nanofasern umfassen, sowie ihre Verwendung.

Trotzdem bleibt ein Wunsch nach Oberflächen, die durch Wasser unbenetzbar sind, d.h. nach Kontakt mit Wasser nicht nass sind. Solche sind geeignet, den Reibungswiderstand zwischen Wasser und der Oberfläche zu reduzieren und haben auch sonst Eigenschaften, die technologisch wünschenswert sind, wie Thermoisolation oder Vermeidung von Biofouling.

Aufgabe der Erfindung war es, solche Oberfächen zur Verfügung zu stellen.

Gelöst wird die Aufgabe durch einen Gegenstand mit einer Oberfläche mit folgenden Merkmalen:
- Filamenten, die eine Länge von 30 bis 6000 µm, ein Verhältnis von Durchmesser zu Länge zwischen 1:10 und 1:20 haben und mit mindestens einer Stirnseite an die Oberfläche gebunden sind,
- wobei der Abstand zwischen zwei Filamenten auf der Oberfläche so ist, dass das Verhältnis von Abstand zur Länge der Filamente zwischen 1:3 und 1:10 ist
- die Filamente eine Elastizität von 10⁴ bis 10¹⁰ N/m² aufweisen
- die Oberfläche des Filaments hydrophob ist, sodass der Kontaktwinkel zwischen einem Filament und Wasser größer als 100° ist.

Erfindungsgemäß wird also ein Gegenstand mit einer Oberfläche bereitgestellt.

Ein Filament im Sinne dieser Anmeldung ist jedes längliche Gebilde, gleich welchen Materials, das die geforderten Eigenschaften aufweist. Im Textilbereich wird unterschieden zwischen abstehenden Haaren, abstehenden Fasern und Filamenten, die eine sehr große Länge haben. Im Sinne dieser Anmeldung wird der Begriff "Filament" jedoch für jede Art Struktur verwendet, die Enden aufweist. Länge und Durchmesser ergeben sich durch die weitere Definition in den Patentansprüchen. Das Wort "Filament" ist für diese Anmeldung gleichbedeutend mit denen im textilen Bereich verwendeten Begriffen "Faser" oder "Haar". Ein Filament im Sinne dieser Anmeldung ist auch eine längere Struktur, die mit zwei oder mehr Punkten an eine Oberfläche gebunden ist. Der Bereich zwischen zwei Kontaktpunkten definiert darin im Sinne dieser Anmeldung die Länge des Filamentes.

Soweit in diesem Anmeldungstext ein Filament im Sinne der Textilindustrie gemeint ist, d.h. aus langen Fasern bestehende Strukturen, deren Länge nur durch das Aufwickelvermögen einer Spüle beschränkt ist, wird der Begriff "Textilfilament" verwendet. Solche Textilfilamente sind viele Meter lang.

An der erfindungsgemäßen Oberfläche befinden sich Filamente, die eine größere Länge als Durchmesser haben. Das Verhältnis von Durchmesser zu Länge (Durchmesser:Länge) liegt zwischen 1:10 und 1:20, bevorzugt 1:12 zu 1:18. Geeignete Längen liegen im Bereich von 30 bis 6.000 µm, bevorzugt 50 bis 1000 µm, mehr bevorzugt 50 bis 200 µm sowie 1000-3000 µm.

Soweit an der Oberfläche Strukturen mit mehreren Kontaktpunkten gebunden sind, bilden diese ebenfalls Filamente mit der entsprechenden Länge soweit zwischen zwei Kontaktpunkten die entsprechenden Abstände vorliegen, d.h. es wird die Länge der Strukturen zwischen zwei Kontaktpunkten gemessen; dies ist die Länge des Filaments.

Die Filamente weisen zwei Stirnseiten auf, die sich jeweils am Ende der Filamente befinden.

In einer Ausführungsform ist genau eine Stirnseite an die Oberfläche gebunden. In einer anderen Ausführungsform sind beide Stirnseiten gebunden, so dass das Filament an der Oberfläche eine Schlaufe bildet. Es sind auch Mischformen möglich, in denen Filamente vorkommen, die mit einer Stirnseite gebunden sind und auch Filamente vorkommen, die mit beiden Stirnseiten gebunden sind.

Die Durchmesser von Filamenten lassen sich beispielsweise mittels Rasterelektronenmikroskopie vermessen.

Soweit die Fasern über die Länge unterschiedliche Durchmesser aufweisen, wird der Durchmesser in der Mitte des Filamentes (50% der Länge) zugrundegelegt.

Die Filamente befinden sich auf der Oberfläche in einem Abstand, wobei das Verhältnis von Abstand zur Länge der Filamente (Abstand:Länge) zwischen 1:3 und 1:10 liegt, d.h. für ein Filament mit einer Länge von 6.000 µm befindet sich ein benachbartes Filament im Bereich von 2.000 bis 600 µm.

Wichtig für die erfindungsgemäße Oberfläche ist die Elastizität der Filamente. Die Elastizität, bestimmt als E-Modul, liegt im Bereich von 10⁴ bis 10¹⁰ N/m². Die Elastizität erlaubt eine Auslenkung der Filamente. Bevorzugte Bereiche liegen zwischen 10⁶ und 10⁸ N/m². Bevorzugt liegt auch das Biege-E-Modul in diesem Bereich.

Weiterhin muss die Oberfläche des Filamentes hydrophob sein, so dass der Kontaktwinkel zwischen einem Filament und Wasser größer als 100° ist. Das lässt sich beispielsweise mittels einem inversen Mikroskop und Ultraschallverneblung vermessen, wie dies in Suter et al., Journal of Arachnology, 32 (2004), Seiten 11 bis 21 beschrieben ist. Bevorzugt liegt der Kontaktwinkel bei mehr als 110°.

In einer anderen Ausführungsform lässt sich die Hydrophobizität auch makroskopisch messen. Erfindungsgemäße Materialien haben bevorzugt makroskopische Kontaktwinkel von mehr als 140°.

Solche erfindungsgemäßen Oberflächen sind überraschenderweise in der Lage, Luft in den Strukturen so einzuschließen, dass sie durch Wasser nicht verdrängt wird; die Oberflächen sind also unbenetzbar. Wichtig ist insbesondere die Elastizität der Filamente, da diese es auch bei Strömungen erlaubt, die Luft zu halten. Bewegungen des Wassers können von den Filamenten elastisch aufgenommen werden.

In einer Ausführungsform hat das Filament selbst eine Struktur, die Erhebungen umfasst, die eine Höhe von 20 Nanometer bis 10 µm aufweisen. Bevorzugt sind die Erhebungen kleiner als 10% des Durchmessers des Filamentes.

Bevorzugte Ausführungsformen dieser Erfindung sind beim Inkontaktbringen mit Wasser unbenetzt. Unbenetzt bedeutet, dass beim vollständigen Untertauchen der Oberfläche in Wasser in einer Tiefe von 15 cm für 48 Stunden nach dem Auftauchen des Gegenstandes mindestens 97% der Oberfläche nach makroskopischer Prüfung trocken sind.

Gegenstand der Erfindung ist auch ein Verfahren zur Herstellung entsprechender Gegenstände mit den Schritten

Herstellen einer Oberfläche mit Filamenten, so dass diese
- Filamente aufweist, die eine Länge von 30 bis 6000 µm, ein Verhältnis von Durchmesser zu Länge zwischen 1:10 und 1:20 haben und mit mindestens einer Stirnseite an die Oberfläche gebunden sind,
- wobei der Abstand zwischen zwei Filamenten auf der Oberfläche so ist, dass das Verhältnis von Abstand zur Länge der Filamente zwischen 1:3 und 1:10 ist
- die Filamente eine Elastizität von 10⁴ bis 10¹⁰ N/m² aufweisen
- die Oberfläche des Filaments hydrophob ist, sodass der Kontaktwinkel zwischen einem Filament und Wasser größer als 100° ist.

Für die Herstellung entsprechender Oberflächen eignen sich insbesondere Textilien beziehungsweise textile Herstellungsverfahren.

Geeignete Oberflächen können erhalten werden durch Textilien, in denen Textilfilamente, die sich im Thermofixierprozess verkürzen ("verkürzende Textilfilamente") mit Textilfilamenten, die sich nicht oder nur wenig in der Länge während des Thermofixierprozesses verändern, kombiniert werden. Es ist auch möglich, verkürzende Textilfilamente mit Textilfilamenten zu kombinieren, die sich im Thermofixierprozess verlängern. Der Thermofixierprozess bedeutet hierbei eine Behandlung bei 150°C für 5 Minuten. Im Textilbereich werden auch andere Bedingungen für die Thermofixierung eingesetzt.

Hieraus hergestellten Textilien ziehen sich durch die verkürzenden Garne etwas zusammen, während die nicht oder nur wenig in der Länge veränderliche Garne oder die sich verlängernde Garne Schlingen oder Bögen an der Oberfläche bildet.

Es ist auch möglich, vorgespannte Elastanfäden zu verwenden, wobei bei der Relaxation eine Schlingen- oder Bögenbildung der mitverarbeitenden Synthesefaser (Stapelfaser oder Multi- oder Monofilament) erfolgt.

Es ist auch möglich, mechanische verwirbelte Garne zu verwenden, die zur Fixierung nachfolgend thermisch behandelt werden (beispielsweise texturierte Garne, Bauschgarne, Hochbauschgarne) eventuell in Kombination mit einem Intermingelprozess des Garns.

Geeignet sind auch Frotteegarne (Schlingenzwirngarn), Chenille oder Raupenzwirngarn, Umspinnungsgarn (Coregarn), Zwirn aus Garnen aus unterschiedlichen Materialien, Bikomponentengarne, bei denen der Mantel einen Längungsverhalten beim Thermofixierprozess aufweist oder bei dem der Kern einen gegenüber dem Mantel stärkeres Schrumpfverhalten aufweist, wodurch ein Hohlraum zwischen Kern und Mantel gebildet wird, der für den Lufteinschluss zur Verfügung steht.

Grundsätzlich sind Gewebe, Gestricke, Gewirke, Vliesstoffe, Geflechte, beflockte Oberflächen geeignet, insbesondere auch zweiflächige Waren wie Abstandsgewebe, Abstandsgestricke und Abstandsgewirke.

Es ist auch möglich, Schlingen oder Schlaufen durch eine Frottierware auf Basis eines Gewebes, Strick- oder Wirkware zu erreichen. Nach einem Thermofixierprozess können die Schlaufen auch aufgeschnitten werden, um so einseitig gebundene Filamente zu erhalten.

Weitere geeignete Materialien sind Florgewebe wie Samt oder Plüsch oder Kette oder Schuss, in den Ausführungen glatt (Velvet) oder mit Rippen (Cord), Plüsch- und Fellimitationen auf Basis von Strick- oder Wirkware, Tuftingware. Abstehende Fasern lassen sich auch auf einer Grundware realisieren, die bereits Garnschlingen besitzt.

Es kann auch durch eine Flocktechnik zunächst mittels Drucktechniken, wie Siebdruck ein Kleber aufgetragen werden, auf dem dann Flockfasern aufgebracht werden. Auch mittels Aufrauen lassen sich Schlingen aus einer Grundware herausziehen.

In einer Ausführungsform der Erfindung werden Abstandstextilien eingesetzt. Hier befindet sich zwischen zwei Schichten ein Abstand. Dieser kann für die Zuführung von Luft benutzt werden. Insbesondere ist es möglich, dass aus dem Zwischenbereich Luft durch die Oberlage austritt und so für neue Luftpolster sorgt. Dies könnte durch einen geringen Überdruck zwischen den Schichten unterstützt werden.

Im Regelfall genügt die Hydrophobizität der entsprechenden Materialien nicht, so dass anschließend eine Hydrophobierung erfolgen muss. Hierzu eignen sich Materialien, mit denen hydrophobe Beschichtungen im Textilbereich erzielt werden können, beispielsweise auf Fluorcarbonbasis, wachsartige Substanzen, Substanzen auf Silikonbasis, etc.

Die erfindungsgemäßen Gegenstände können beispielsweise genutzt werden, um hieraus Badebekleidung herzustellen, die trocken bleibt. Im Bereich der Wettkampfschwimmbekleidung könnte dies darüber hinaus zur Reduzierung des Strömungswiderstandes beitragen. Hier ist es auch möglich, durch die Konfektion des Schwimmanzuges einen Überdruck zwischen zwei Lagen eines Abstandstextils zu erreichen.

Weiterhin geeignet ist das Material zur Herstellung von Tauchanzügen und Anzügen für Surfer und Windsurfer; insbesondere bei Tauchern könnte die sowieso vorhandene Pressluft genutzt werden, um einen Überdruck zwischen zwei Schichten des Abstandtextils zu erhalten.

Neben dem Bekleidungsbereich eignen sich die erfindungsgemäßen Materialien jedoch auch zur Auskleidung von Rohren zur Reduzierung des Strömungswiderstandes. Auch ist es möglich, solche Oberflächen an Schiffsrümpfen einzusetzen. Insbesondere zusammen mit Maßnahmen zur Erneuerung der Luftschichten lässt sich so der Strömungswiderstand reduzieren.

Eine weitere Möglichkeit entsprechende Strukturen herzustellen, sind sogenannte Mikroreplikverfahren. Hierzu wird die Oberfläche eines Materials, das entsprechende Eigenschaften aufweist, mittels einer Abformmasse in ein Negativ überführt. Diese Form kann dann benutzt werden, um mittels eines flüssigen Kunststoffes, beispielsweise eines Kunstharzlackes, entsprechende Oberflächen herzustellen.

In einer besonders bevorzugten Ausführungsform werden mehrere entsprechender Formen verwendet, um größere Flächen erhalten zu können.

Besonders geeignet ist ein Verfahren, bei dem die Negativformen zu einer Walze zusammengesetzt werden. Auf diesem Wege kann die Herstellung kontinuierlich erfolgen, in dem eine aushärtbare Kunststoffmasse durch die Walze geführt wird. Direkt nach der Formung wird die Kunstharzmasse durch Strahlung beispielsweise Ultraviolettstrahlung, ausgehärtet und verbleibt dann in der durch die Form vorgegebenen Oberflächenstruktur.

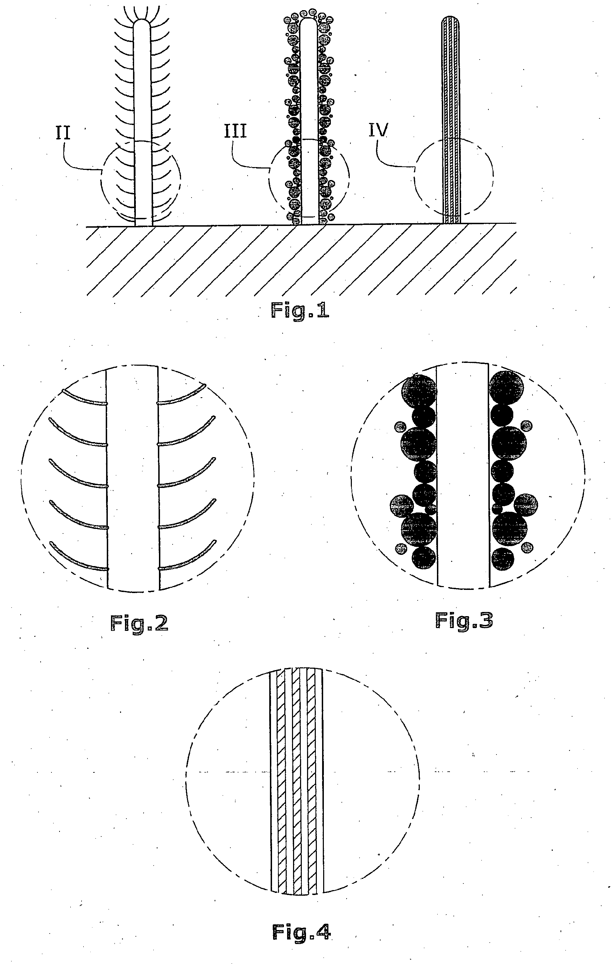

Figur 1 zeigt beispielhaft Filamente auf einer Oberfläche.
Figur 2 zeigt die Vergrößerung II eines Filaments mit Strukturen. Hier haben die Filamente wiederum filamentartige Strukturen.
Figur 3 zeigt die Vergrößerung III eines Filaments mit Strukturen. Hier haben die Filamente Partikel auf der Oberfläche.
Figur 4 zeigt die Vergrößerung IV eines Filaments mit Strukturen. Hier haben die Filamente Rillen, die dazu führen, dass das die nicht gerillten Bereiche als Erhebungen verbleiben.

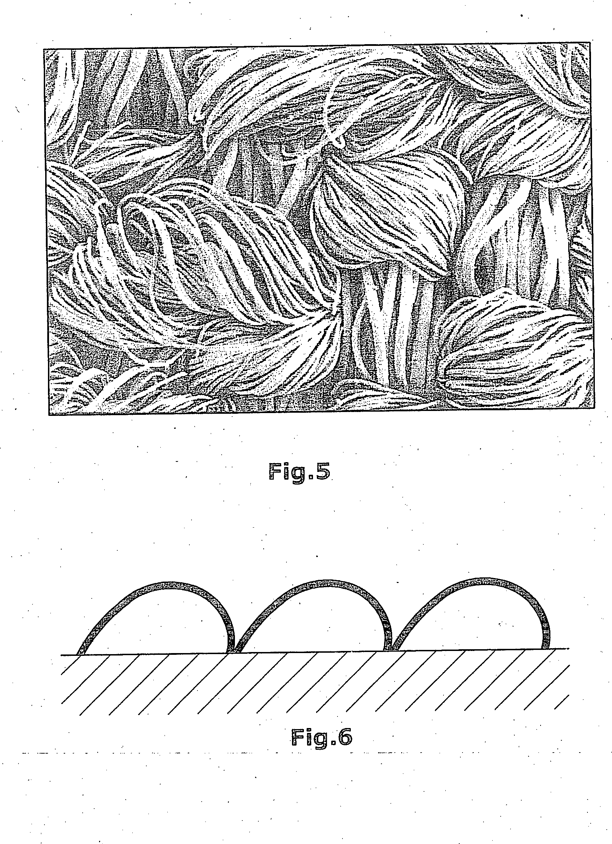

Figur 5 zeigt eine rasterelektronenmikroskopische Aufnahme eines Textils aus sich verkürzenden und sich verlängernden Textilfilamenten. 1 cm der Aufnahme entspricht 120 µm.
Figur 6 zeigt ein Textilfilament mit mehreren Kontaktpunkten an der Oberfläche. Die Länge der erfindungsgemäßen Filamente ergibt sich aus dem Textilfilament zwischen zwei Kontaktpunkten.

Die Erfindung wird durch die folgenden Beispiele näher erläutert.

### Beispiel 1

Ein Multifilamentgarn, bestehend aus Polyesterfasern aus einer sich verlängernden und einer sich verkürzenden Komponente, wurde als Leinwandbindung gewebt. Anschließend erfolgte eine Thermobehandlung, die zur Schlaufenbildung führte. Hieran schloss sich eine Beschichtung des Gewebes an. Die Beschichtung bestand aus einer fluorcarbonhaltige Verbindung in Kombination mit Nanopartikeln auf Al₂O₃ oder SiO₂ Basis.

Eine wässrige Zubereitung dieser Komponenten wurde verwendet, um das Gewebe hierin zu tränken. Überschüssiges Material wurde durch ein Quetschwerk entfernt. Anschließend erfolgte ein Trocknungsschritt bei etwa 150° Celsius. Hierdurch wurde ein Flächengewichtsauftrag - in Abhängigkeit von der Konzentration des Beschichtungsmittels - von 0,1 bis 3,0 Gew.-% erzielt. Entsprechende Textilien zeigten nach der Trocknung, dass sie beim 48 stündigen Eintauchen in Wasser (Tiefe 15 cm) praktisch unbenetzt blieben. Beim Herausnehmen konnte makroskopisch keine Benetzung des Materials festgestellt werden.

### Beispiel 2

### Mikroreplikverfahren

Zwei Komponenten Silikon-Abformmasse (z.B. President light body, Coltène, Schweiz) wird auf die Oberfläche von Wasserfarn (*Salvinia natans*) oder Wassersalat (*Pistia stratiotes*) aufgebracht. Nach dem Aushärten wird das flexible und gummiartige Negativ abgezogen. Das Negativ wird rechteckig zugeschnitten und dieses Verfahren mehrfach wiederholt. Anschließend werden die Negative in einer Form aneinandergereiht, um eine größere Fläche zu erreichen. Um nahtlose Übergänge zu erreichen wird von allen Seiten leichter Druck auf die Negative ausgeübt. Die so entstandene Negativform wird mit Acryllack ausgegossen. Wird ein Polymer mit hoher Hydrophobie benutzt ist keine weitere Hydrophobisierung der Replik nötig, ansonsten muss die Replik nachträglich z.B. mit Antispread F 2/50 FK 60 (Dr. Tilwich, Horb, Deutschland) hydrophobisiert werden.

### Beispiel 3

Mehrere Negativformen, wie sie im Beispiel 2 erhalten wurden, wurden zu einer Walze zusammengesetzt. Ein UV-härtbarer Lack wurde in Walzenbreite auf die Walze zugeführt und mittels der so hergestellten Walze strukturiert. Unmittelbar nach dem Kontakt zwischen Walze und Film wurde mittels einer UV-Lampe eine Aushärtung des Lackes vorgenommen. Auf diesem Wege wurde eine Folie erhalten, die die erfindungsgemäße Oberflächenstruktur aufwies.

### Beispiel 4

### Kombiniertes Verfahren Fotolithografie/Ätzung

Herstellung einer Oberfläche aus PDMS (Poly-dimethylsiloxan):
Auf einer Silikonoberfläche (z.B. PDMS) werden mittels Maskaligner Löcher mit einem Abstand von 3 bis 10 µm in eine Fotomaske (positive lift-off photoresist) gestanzt. Nach Goldbesputterung wird die Fotomaske abgezogen und die verbleibenden Goldplättchen fungieren als Maske. Letztere schützen die darunter liegende Silikonschicht vor der anschließenden folgenden Plasma-Ätzung (reactive ion etching), wodurch die Filamente aus dem Silikon geätzt werden. Bei nicht ausreichender Hydrophobie ist eine nachträgliche Hydrophobisierung z.B. mit Antispread F 2/50 FK 60 (Dr. Tilwich, Horb, Deutschland) notwendig.

## Patentansprüche

1. Gegenstand mit einer Oberfläche, die
• Filamente aufweist, die eine Länge von 30 bis 6000 µm, ein Verhältnis von Durchmesser zu Länge zwischen 1:10 und 1:20 haben und mit mindestens einer Stirnseite an die Oberfläche gebunden sind,
• wobei der Abstand zwischen zwei Filamenten auf der Oberfläche so ist, dass das Verhältnis von Abstand zur Länge der Filamente zwischen 1:3 und 1:10 liegt,
• die Filamente eine Elastizität von 10⁴ bis 10¹⁰ N/m² aufweisen
• die Oberfläche des Filaments hydrophob ist, sodass der Kontaktwinkel zwischen einem Filament und Wasser größer als 100° ist.

2. Gegenstand nach Anspruch 1, **dadurch gekennzeichnet, dass** das Filament mit einer Struktur versehen ist, die Erhebungen umfasst, die eine Höhe von 20 nm bis 10 µm aufweisen.

3. Gegenstand nach Anspruch 1 oder 2, **dadurch gekennzeichnet, dass** der Gegenstand beim Inkontaktbringen mit Wasser für mindestens 48 Stunden unbenetzt bleibt.

4. Gegenstand nach einem der Ansprüche 1 bis 3, **dadurch gekennzeichnet, dass** die Filamente mit beiden Stirnseiten an die Oberfläche gebunden sind.

5. Gegenstand nach einem der Ansprüche 1 bis 4, **dadurch gekennzeichnet, dass** es sich bei dem Gegenstand mit der Oberfläche um ein Textil handelt.

6. Gegenstand nach Anspruch 5, **dadurch gekennzeichnet, dass** das Textil aus verkürzenden und nicht-verkürzenden oder verlängernden Textilfilamente besteht.

7. Gegenstand nach einem der Ansprüche 1 bis 3, **dadurch gekennzeichnet, dass** der Gegenstand eine Polymerfolie ist.

8. Verwendung eines Gegenstandes nach einem der Ansprüche 1 bis 6 zur Herstellung von Badebekleidung, Wettkampfschwimmbekleidung, Tauchanzügen, Anzügen für Surfer und Windsurfer, zur Auskleidung von Rohren und als Oberfläche von Schiffsrümpfen.

9. Verfahren zur Herstellung eines Gegenstandes nach einem der Ansprüche 1 bis 7 mit den Schritten
Herstellen einer Oberfläche mit Filamenten, so dass diese
• Filamente aufweist, die eine Länge von 30 bis 6000 µm, ein Verhältnis von Durchmesser zu Länge zwischen 1:10 und 1:20 haben und mit mindestens einer Stirnseite an die Oberfläche gebunden sind, wobei der Abstand zwischen zwei Filamenten auf der Oberfläche ein Verhältnis von Abstand zu Länge der Filamente zwischen 1:3 und 1:10 haben
• die Filamente eine Elastizität von 10⁴ bis 10¹⁰ N/m² aufweisen
• die Oberfläche des Filaments hydrophob ist, sodass der Kontaktwinkel zwischen einem Filament und Wasser größer als 100° ist.

10. Verfahren nach Anspruch 9, **dadurch gekennzeichnet, dass** für die Herstellung verkürzende und nicht-verkürzende oder verlängernde Textilfilamente eingesetzt werden.

11. Verfahren nach Anspruch 9, **dadurch gekennzeichnet, dass** ein Mikroreplikverfahren eingesetzt wird.

12. Verwendung des Gegenstandes nach einem der Ansprüche 1 bis 7 zur Erzielung einer Unbenetzbarkeit des Gegenstandes beim Inkontaktbringen mit Wasser, wobei unbenetzt bedeutet, dass beim vollständigen Untertauchen der Oberfläche in Wasser in einer Tiefe von 15 cm für 48 h nach dem Auftauchen des Gegenstandes mindestens 97% der Oberfläche nach makroskopischer Prüfung trocken sind.

## Claims

1. An object having a surface that has:
• filaments having a length of from 30 to 6000 µm, a diameter to length ratio of from 1:10 to 1:20, and are bound to the surface with at least one front face thereof;
• wherein the distance between two neighboring filaments on the surface is such that the ratio of such distance to the length of the filaments is from 1:3 to 1:10;
• the filaments have an elasticity of from 10⁴ to 10¹⁰ N/m²;
• the surface of the filament is hydrophobic, so that the contact angle between a filament and water is greater than 100°.

2. The object according to claim 1, **characterized in that** said filament is provided with a structure comprising elevations with a height of from 20 nm to 10 µm.

3. The object according to claim 1 or 2, **characterized in that** said object remains unwetted upon contacting with water for at least 48 hours.

4. The object according to any of claims 1 to 3, **characterized in that** said filaments are bound to the surface with both front faces thereof.

5. The object according to any of claims 1 to 4, **characterized in that** said object having a surface is a textile.

6. The object according to claim 5, **characterized in that** said textile consists of shrinkable and non-shrinkable or extendable textile filaments.

7. The object according to any of claims 1 to 3, **characterized in that** said object is a polymer sheet.

8. Use of the object according to any of claims 1 to 6 for preparing bathing wear, swimming wear for swimming competitions, diving suits, suits for surfers and wind surfers, for lining pipes, and as a surface of bodies of ships.

9. A process for preparing an object according to any of claims 1 to 7, comprising the steps of:
preparing a surface with the filaments in such a way that:
• it has filaments having a length of from 30 to 6000 µm, a diameter to length ratio of from 1:10 to 1:20, and are bound to the surface with at least one front face thereof, wherein the distance between two neighboring filaments on the surface is such that the ratio of such distance to the length of the filaments is from 1:3 to 1:10;
• the filaments have an elasticity of from 10⁴ to 10¹⁰ N/m²;
• the surface of the filament is hydrophobic, so that the contact angle between a filament and water is greater than 100°.

10. The process according to claim 9, **characterized in that** shrinkable and non-shrinkable or extendable textile filaments are employed for said preparation.

11. The process according to claim 9, **characterized in that** a micro-replica process is employed.

12. Use of the object according to any of claims 1 to 7 for achieving unwettability of said object upon contacting with water, "unwetted" meaning that when the surface is completely submerged in water at a depth of 15 cm for 48 hours, at least 97% of the surface is found to be dry in a macroscopic test upon emerging of the object.

## Revendications

1. Article pourvu d'une surface qui
• présente des filaments qui ont une longueur de 30 à 6000 µm et un rapport diamètre sur longueur de 1:10 à 1:20 et qui sont liés à la surface par au moins une face frontale,
• l'écart entre deux filaments sur la surface étant tel que le rapport écart sur longueur des filaments est compris entre 1:3 et 1:10,
• les filaments ayant une élasticité de 10⁴ à 10¹⁰ N/m²
• la surface du filament étant hydrophobe de sorte que l'angle de contact entre un filament et l'eau est supérieure à 100°.

2. Article selon la revendication 1, **caractérisé en ce que** le filament est muni d'une structure comprenant des saillies d'une hauteur de 20 nm à 10 µm.

3. Article selon la revendication 1 ou 2, **caractérisé en ce que** l'article reste non mouillée lorsqu'il a été mis en contact avec l'eau pendant au moins 48 heures.

4. Article selon l'une des revendications 1 à 3, **caractérisé en ce que** les filaments sont liés à la surface par deux faces frontales.

5. Article selon l'une des revendications l à 4, **caractérisé en ce que** l'article pourvu de la surface est un textile.

6. Article selon la revendication 5, **caractérisé en ce que** le textile est constitué de filaments textiles qui se rétrécissent et qui ne se rétrécissent pas ou s'allongent.

7. Article selon l'une des revendications 1 à 3, **caractérisé en ce que** l'article est un film polymère.

8. Utilisation d'un article selon l'une des revendications 1 à 6 dans la fabrication d'une tenue de bain, d'une tenue de natation pour la compétition, de combinaisons de plongée, de combinaisons pour surfeurs et véliplanchistes, pour l'habillage de tuyaux, et comme surface de coques de navires.

9. Procédé de fabrication d'un article selon l'une des revendications 1 à 7, comprenant les étapes consistant à fabriquer une surface dotée de filaments, de sorte que celle-ci
• présente des filaments qui ont une longueur de 30 à 6000 µm et un rapport diamètre sur longueur de 1:10 à 1:20 et qui sont liés à la surface par au moins une face frontale, l'écart entre deux filaments sur la surface étant tel que le rapport écart sur longueur des filaments est compris entre 1:3 et 1:10,
• les filaments ayant une élasticité de 10⁴ à 10¹⁰ N/m²
• la surface du filament étant hydrophobe de sorte que l'angle de contact entre un filament et l'eau est supérieure à 100°.

10. Procédé selon la revendication 9, **caractérisé en ce que** pour la fabrication l'on utilise des filaments textiles qui se rétrécissent et qui ne se rétrécissent pas ou s'allongent.

11. Procédé selon la revendication 9, **caractérisé en ce que** l'on utilise un procédé de micro-réplique.

12. Utilisation de l'article selon l'une quelconque des revendications 1 à 7 de sorte que l'article n'est pas mouillé lorsqu'il est mis en contact avec l'eau, le terme 'non mouillé' signifiant que lorsque la surface est totalement immergée dans l'eau à une profondeur de 15 cm pendant 48 heures et après que l'article a été ressorti, au moins 97% de la surface est sèche après examen macroscopique.
